# EUROPÄISCHE PATENTANMELDUNG

(11) **EP 1 074 372 A1**
(43) Veröffentlichungstag der Anmeldung: **07.02.2001**
(21) Anmeldenummer: 99113050.1
(22) Anmeldetag: 06.07.1999
(51) Int. Cl.: B29C 45/26

(54) **Spritzgiessform**

(71) Anmelder: IFW MANFRED OTTE GESELLSCHAFT m.b.H. & Co. KG, 4563 Micheldorf (AT)
(72) Erfinder: Mitteregger, Erich, 4563 Micheldorf (AT); Schwaiger, Ernst, 4563 Micheldorf (AT)
(74) Vertreter: Torggler, Paul Norbert, Dr.

(57) **Zusammenfassung**

Spritzgießform zur Herstellung von Fittings (1) aus thermoplastischem Kunststoff, die an der Innenseite wenigstens eine Ringnut (6) aufweisen, mit einer teilbaren Außenform (5) und einem darin verschiebbaren Formkern (4), an dem ein komplementärer Formwulst für die Ringnut ausgebildet ist, der im Bereich der Ringnut (6) des Fittings (1) von mehreren zusammenlegbaren Segmenten (3,3') gebildet wird, wogegen die Außenseite des die Ringnut (6) umgebenden Bereiches des Fittings (1) teilweise durch die teilbare Außenform (5) und teilweise durch einen mit dem Formkern verbundenen Formring (2) gebildet wird, und die am Fitting (1) endende Trennfläche (9) zwischen Formring (2) und Außenform (5) bezogen auf die Achse des Formkerns (4) unter einem Winkel von weniger als 45° endet.

## Beschreibung

Die Erfindung bezieht sich auf eine Spritzgießform zur Herstellung von Fittings aus thermoplastischem Kunststoff, die an der Innenseite wenigstens eine Ringnut aufweisen, mit einer teilbaren Außenform und einem darin verschiebbaren Formkern, an dem ein komplementärer Formwulst für die Ringnut ausgebildet ist, der im Bereich der Ringnut des Fittings von mehreren zusammenlegbaren Segmenten gebildet wird, wogegen die Außenseite des die Ringnut umgebenden Bereiches des Fittings teilweise durch die teilbare Außenform und teilweise durch einen mit dem Formkern verbundenen Formring gebildet wird.

Eine derartige Einrichtung ist in AT-B 387 750 beschrieben. Bei dieser Einrichtung trifft der Formring in Axialrichtung des Fittings gesehen etwa in der Mitte des die Ringnut umgebenden Bereiches auf die teilbare Außenform. Beim Schließen der Außenform bewegt sich diese also entlang der normal zum Formkern stehenden Stirnfläche des Formringes. Dies führt bei geringsten Abweichungen vom Idealzustand dazu, daß entweder der Formring beschädigt wird oder aber, daß zwischen Formring und Außenform ein Spalt entsteht, in welchen Kunststoff eindringt. Dadurch wird entlang der die Ringnut umgebenden Außenseite des Fittings ein unschöner Steg erzeugt, der zu vermeiden ist.

Auch DE 94 14 523 U entspricht der eingangs gegebenen Definition. Als ein Vorteil der dort dargestellten Zwangssteuerung des Formkerns ist jedoch angegeben, daß der im Ausführungsbeispiel gezeigte kernfeste Formring zum Schutz der Ringsegmente nicht mehr notwendig sei. Dies ist insofern richtig, als die Zwangssteuerung nach DE 94 14 523 U noch funktionssicherer ist als die hydraulische Betätigung der Segmente gemäß AT-B 387 750. Bei Wegfall des Formringes kann jedoch auch ein zwangsgesteuertes Segment die teure Außenform beschädigen, falls es aus irgendeinem Grunde verformt ist.

Aufgabe der Erfindung ist es, die aufgezeigten Nachteile des Standes der Technik zu vermeiden. Dies wird dadurch erreicht, daß die am Fitting endende Trennfläche zwischen Formring und Außenform bezogen auf die Achse des Formkerns unter einem Winkel von weniger als 45° endet.

Durch die erfindungsgemäße Maßnahme, die Trennfläche am Formring eher parallel zur Achse als normal zu dieser anzuordnen, fallen die Probleme mit der genauen Passung zwischen Formring und Außenform weg. Ließe man die Trennfläche, so wie dies nach dem Stand der Technik üblich war, auf die achsparallel verlaufende Außenseite des die Ringnut umgebenden Bereiches des Fittings auftreffen, so würde die erfindungsgemäße Maßnahme dazu führen, daß der Formring eine scharfe vordere Kante erhält, welche beschädigungsanfällig wäre. Vorzugsweise ist daher vorgesehen, daß die an die Trennfläche anschließende, den Fitting begrenzende Fläche des Formrings unter einem Winkel von mehr als 30°, vorzugsweise von mehr als 45°, geneigt ist. Praktisch bedeutet dies, daß die Trennfläche nicht an einem achsparallelen Teil des Fittings, sondern an der vorderen Schrägflanke der durch die Ringnut definierten Rinne ansetzt. Damit läßt sich eine spitzwinkelige Vorderkante des Formringes sogar gänzlich vermeiden.

Anschließend wird die Erfindung anhand der Zeichnung weiter erläutert.

In dieser ist Fig. 1 ein Längsschnitt durch ein Ausführungsbeispiel der Erfindung, Fig. 2 ein vergrößerter Ausschnitt des erfindungswesentlichen Teiles der Einrichtung in der Ausführung nach dem Stande der Technik, Fig. 3 eine Darstellung eines analogen Ausschnittes mit erfindungsgemäßer Ausgestaltung.

Das Formnest für den Fitting 1 besteht aus einem Formkern und einer Außenform. Die Außenseite des Fittings 1 wird einerseits durch die Formhälften der teilbaren Außenform 5, andererseits durch den mit dem Formkern 4 abziehbaren Formring 2 gebildet.

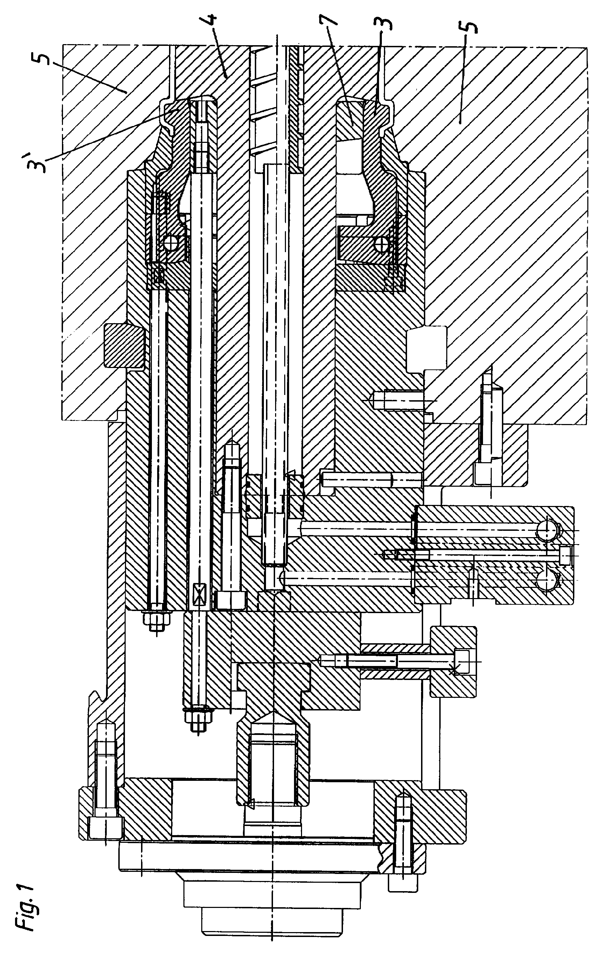

Während des Spritzvorganges befinden sich die die Ringnut 6 des Fittings 1 bildenden Gruppen von Segmenten 3 bzw. 3' in der in Fig. 1 dargestellten Position, in welcher sie durch den Verriegelungsring 7 festgehalten werden.

Ist der Einspritzvorgang abgeschlossen, so werden die beiden Hälften der teilbaren Außenform 5 auseinandergefahren und der Verriegelungsring 7 wird über eine oder mehrere Zugstangen 8 zurückgezogen. Die als zweiarmige Hebel ausgebildeten Segmente 3 werden dabei nach innen verschwenkt und nehmen dabei die zur Abstützung der zweiarmigen Segmente 3 dienenden Segmente 3' mit. Insoweit entspricht die dargestellte Einrichtung dem Stand der Technik. Neu hingegen ist die Ausbildung des mit dem verschiebbaren Formkern fest verbundenen Formringes 2.

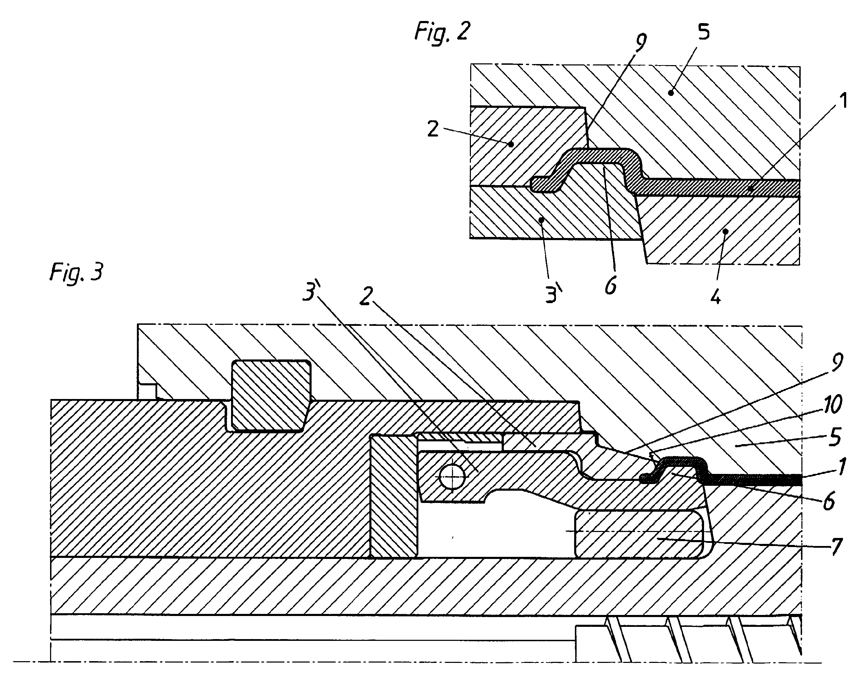

Fig. 2 zeigt, wie dieser Formring 2 nach dem Stand der Technik mit der teilbaren Außenform 5 zusammenwirkt. Die am Fitting 1 endende Trennfläche 9 zwischen Formring 2 und Außenform 5 verläuft dabei normal zu einem achsparallelen Teil des Fittings 1 und damit normal zur Achse des Formkernes.

Der erfindungsgemäße Formring 2, welcher in Fig. 3 dargestellt ist, unterscheidet sich wesentlich vom bekannten Formring gemäß Fig. 2. Die Trennfläche 9 zwischen der teilbaren Außenform 5 und dem Formring 2 verläuft nun nicht mehr normal zur Achse des Fittings 1, sondern beinahe parallel zu dieser. Dennoch wird vermieden, daß die Vorderseite des Formringes 2 eine beschädigungsanfällige schmale Klinge bildet. Dies wird dadurch erreicht, daß die Trennfläche an der schrägen Vorderflanke 10 des die Ringnut begrenzenden Bereiches des Fittings 1 endet.

## Patentansprüche

1. Spritzgießform zur Herstellung von Fittings aus thermoplastischem Kunststoff, die an der Innenseite wenigstens eine Ringnut aufweisen, mit einer teilbaren Außenform und einem darin verschiebbaren Formkern, an dem ein komplementärer Formwulst für die Ringnut ausgebildet ist, der im Bereich der Ringnut des Fittings von mehreren zusammenlegbaren Segmenten gebildet wird, wogegen die Außenseite des die Ringnut umgebenden Bereiches des Fittings teilweise durch die teilbare Außenform und teilweise durch einen mit dem Formkern verbundenen Formring gebildet wird, dadurch gekennzeichnet, daß die am Fitting (1) endende Trennfläche (9) zwischen Formring (2) und Außenform (5) bezogen auf die Achse des Formkerns (4) unter einem Winkel von weniger als 45° endet.

2. Spritzgießform nach Anspruch 1, dadurch gekennzeichnet, daß die an die Trennfläche (9) anschließende, den Fitting (1) begrenzende Fläche (10) des Formrings (4) unter einem Winkel von mehr als 30°, vorzugsweise von mehr als 45°, geneigt ist.
